# EUROPEAN PATENT SPECIFICATION

(11) **EP 3 221 976 B1**
(45) Date of publication and mention of the grant of the patent: **28.08.2019**
(21) Application number: 15819922.4
(22) Date of filing: 03.12.2015
(51) Int. Cl.: H04B 5/00, H02J 7/02

(54) **WIRELESS CHARGING APPARATUS**
DRAHTLOSE LADEVORRICHTUNG
APPAREIL DE CHARGE SANS FIL

(30) Priority: 22.12.2014 US 201414579003
(43) Date of publication of application: 27.09.2017
(73) Proprietor: Microsoft Technology Licensing, LLC, Redmond, WA 98052-6399 (US)
(72) Inventor: TOIVOLA, Timo, Redmond, Washington 98052-6399 (US); KOSKINEN, Pasi, Redmond, Washington 98052-6399 (US)
(74) Representative: Driver, Virginia Rozanne
(86) International application number: PCT/US2015/063572
(87) International publication number: WO 2016/105897

(56) References cited:
- US-A1- 2012 065 794
- US-A1- 2012 242 283
- US-A1- 2013 300 206

## Description

### BACKGROUND

Wireless charging uses an electromagnetic field to transfer energy to a receiving device. A wireless charger comprises a transmitter, for example, an induction coil, which is able to transmit power that a receiver having its own induction coil in the receiving device is able to receive. The received power may be used, for example, to charge a battery of the receiving device.

A wireless charger may be able to adjust the level of transmission power by adjusting an input voltage provided to the induction coil. The adjustment of the input voltage may be done, for example, with a DC/DC converter. The use of a DC/DC converter, however, causes, for example, power losses in the wireless charger.

Another way to control transmitted power is to adjust transmitter frequency. Yet another possibility is to control pulse width. By controlling the pulse width, it is possible to, for example, fine tune the transmitted power level.

US 2013/0300206 discloses an apparatus and method for wirelessly receiving power, and an apparatus and method for wirelessly transmitting power, wherein wireless power receiver includes a modulator configured to change an impedance in order to perform load modulation and thereby communicate a message to the wireless power transmitter.

US2012/0065794 discloses a control apparatus configured to control communication between an on-vehicle device and a device coupled to the on-vehicle device via a cable. The control apparatus is configured so as, based on the length of the cable, to perform control for ensuring communication quality between the on-vehicle device and the other device.

### SUMMARY

The invention is set out in the independent claims whereas preferred embodiments are outlined in the dependent claims.

Many of the attendant features will be more readily appreciated as they become better understood by reference to the following detailed description considered in connection with the accompanying drawings.

### DESCRIPTION OF THE DRAWINGS

The present description will be better understood from the following detailed description read in light of the accompanying drawings, wherein:
FIG. 1A is a block diagram of one example of a wireless charging apparatus;
FIG. 1B is a block diagram of another example of a wireless charging apparatus;
FIG. 2A is a block diagram of another example of a wireless charging apparatus;
FIG. 2B is a block diagram of another example of a wireless charging apparatus;
FIG. 2C is a block diagram of another example of a wireless charging apparatus; and
FIG. 3 is a flow diagram of a method for a wireless charging apparatus.
Like reference numerals are used to designate like parts in the accompanying drawings.

### DETAILED DESCRIPTION

The invention is defined by the appended claims. In the following, embodiments not falling within the scope of the claims should be understood as examples useful to understand the invention. The detailed description provided below in connection with the appended drawings is intended as a description of the present examples and is not intended to represent the only forms in which the present example may be constructed or utilized. However, the same or equivalent functions and sequences may be accomplished by different examples.

Although the present examples may be described and illustrated herein as being implemented in a wireless charging apparatus, it is only a general example and not a limitation. As those skilled in the art will appreciate, the present examples are suitable for application in a variety of different types of wireless charging apparatuses, for example, mobile apparatuses, charging pads, etc.

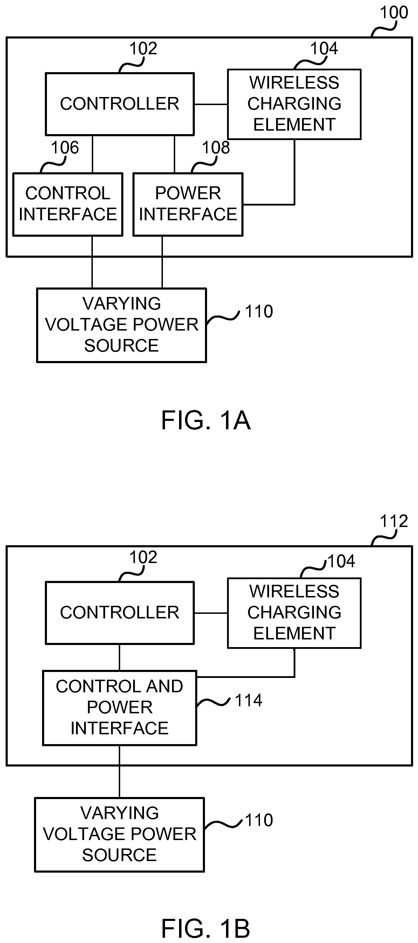

FIG. 1A is a block diagram of one example of a wireless charging apparatus 100. The wireless charging apparatus 100 comprises a controller 102 connected to a wireless charging element 104. The wireless charging element 104 is, for example, a transmitter coil, for example, an induction coil or a resonance coil. The controller 102 controls the transmitted power provided by the wireless charging element 104 by controlling an input voltage supplied to the wireless charging element 104. The wireless charging apparatus 100 comprises also a control interface 106 and a power interface 108. The wireless charging apparatus 100 is connected to an external varying voltage power source 110 via the control interface 106 and the power interface 108. The controller 102 requests a charging voltage via the control interface 106 from the varying voltage power source 110. The varying voltage power source 110 provides the requested charging voltage to the wireless charging apparatus 100 via the power interface 108.

The controller 102 causes supply of an input voltage to the wireless charging element 104 in response to the voltage received from the varying voltage power source 110. The input voltage may not be identical with the requested charging voltage since there may be some power losses between the varying voltage power source 110 and the wireless charging element 104. In one example, the controller 102 ensures that a correct amount of power is transmitted by the wireless charging element 104. In other words, the controller 104 makes sure that the requested charging voltage covers all input power losses.

In other words, the wireless charging apparatus 100 controls the power level transmitted by the wireless charging element 104 by controlling the voltage requested from the external power source. The wireless charging apparatus 100 itself need not perform any DC/DC conversions in order to obtain an input voltage to be supplied to the wireless charging element 104.

FIG. 1B is a block diagram of another example of a wireless charging apparatus 112. The wireless charging apparatus 112 disclosed in FIG. 1B is similar to the wireless charging apparatus 100 disclosed in FIG. 1A. The difference is that in the example of FIG. 1B control and power interfaces 106, 108 are provided by a single control and power interface 114. The control and power interface 114 refers, for example, to a port arranged in the wireless charging apparatus 112. In one example, the port is a universal serial bus type C connector port. The universal serial bus type C connector port is only one example of a port that may be used.

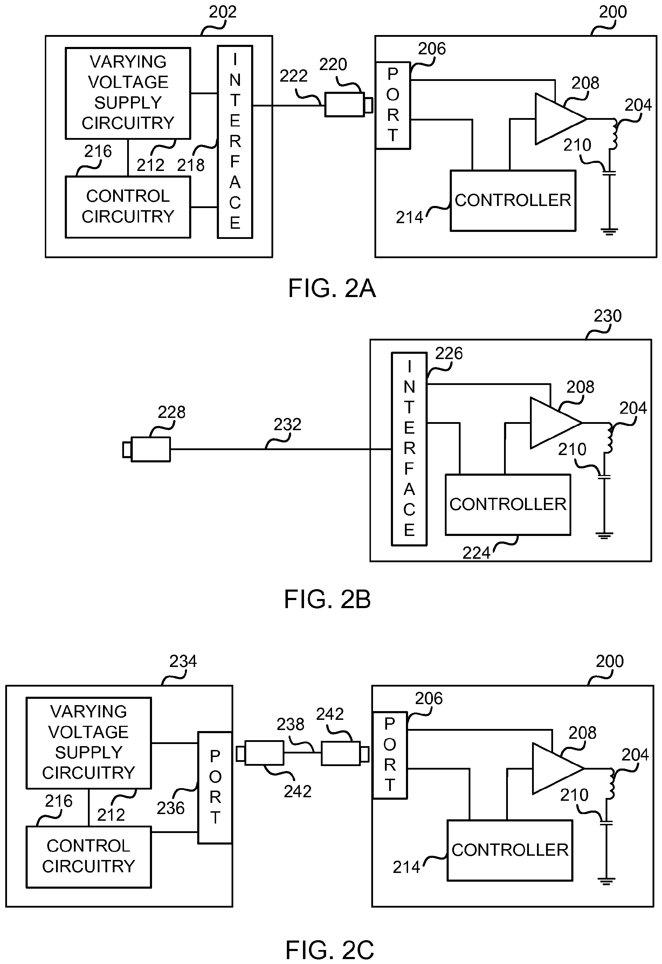

FIG. 2A is a block diagram of another example of a wireless charging apparatus 200. The wireless charging apparatus 200 comprises a controller 214 for controlling transmitted power provided by a transmitter, for example, an induction coil 204. The induction coil 204 is grounded via a capacitor 210. An external varying voltage power source 202 is connected to the wireless charging apparatus 200 with a cable 222 having a connector 220 at its end. The connector 220 is detachably attachable to a port 206 in the wireless charging apparatus 200. It is evident that the induction coil 204 is only one example of possible wireless charging elements that can be used.

When the connector 220 is connected to the port 206, the controller 214 requests a charging voltage via the port 206 from the external varying voltage power source 202. A control circuitry 216 in the external varying voltage power source 202 receives the request via an interface 218. The control circuitry 216 controls a varying voltage supply circuit 212 to provide the requested charging voltage to the wireless charging apparatus 200 via the interface 218, cable 222 and connector 220 connected to the port 206. The controller 214 controls a bridge driver 208 to provide an input voltage to be supplied to the induction coil 204. When the input voltage is supplied to the induction coil 204, the induction coil 204 transforms the input voltage to an electromagnetic field and transfers energy via the electromagnetic field.

In one example, the port 206 is configured to receive a universal serial bus (USB) type C connector. When a USB 3.1 type C connector and USB Power Delivery (PD) v2.0 are used they allow the wireless charging apparatus 200 to negotiate the amount of power needed. This means the wireless charging apparatus 200 is able to request a certain voltage level from the external varying voltage power source 202.

FIG. 2B is a block diagram of another example of a wireless charging apparatus 230. The wireless charging apparatus 230 disclosed in FIG. 2B is similar to the one disclosed in FIG. 2A. The difference is that instead of a port 206, the wireless charging apparatus 230 comprises an interface 226 which is connected to a cable 232. The cable 232 has a connector 228 in its end which can be detachably connected to a port in an external varying voltage power source (not disclosed in FIG. 2B).

In one example, the connector 228 is a universal serial bus (USB) type C connector. When a USB 3.1 type C connector and USB Power Delivery (PD) v2.0 are used they allow the wireless charging apparatus 230 to negotiate the amount of power needed. This means the wireless charging apparatus 230 is able to request a certain voltage level from the external varying voltage power source.

FIG. 2C is a block diagram of another example of a wireless charging apparatus 200 and an external power source 234. The wireless charging apparatus 200 of FIG. 2C is identical with the wireless charging apparatus in FIG. 2A. Therefore, regarding the features of the wireless charging apparatus 200, reference is made to FIG. 2A and its description. However, in the example of FIG. 2C, the external varying voltage power source 234 is connected to the wireless charging apparatus 200 with a cable 238 having a connector 244 at its both ends. The connector 242 is detachably attachable to a port 236 in the external varying voltage power source 234 and to a port 206 in the wireless charging apparatus 200. In one example, the ports 206, 236 are configured to receive a universal serial bus (USB) type C connector. When a USB 3.1 type C connector and USB Power Delivery (PD) v2.0 are used they allow the wireless charging apparatus 200 to negotiate the amount of power needed. This means the wireless charging apparatus 200 is able to request a certain voltage level from the external varying voltage power source 234.

The examples disclosed in FIG. 2A and 2B provides a solution which enables to connect the wireless charging apparatus 200, 230 to any external power source able to provide varying voltages level in response to a request from the wireless charging apparatus 200, 230.

In one further example of FIGS. 2A, 2B and 2C, when a USB 3.1 type C connector and USB Power Delivery (PD) v2.0 are used, this makes it possible for the controller to request voltage from the external varying voltage power source using, for example, 50mV steps and thus to provide good power control resolution.

In one further example of FIGS. 1A, 1B, 2A, 2B and 2C, the wireless charging apparatus may receive a signal from a remote device receiving the electromagnetic field provided by the wireless charging element or induction coil to increase or decrease power provided by the wireless charging element or the induction coil 204. In response to the signal, the controller requests a new charging voltage from the external varying voltage power source. The controller then causes supply of a new input voltage to the wireless charging element or induction coil in response to new charging voltage received from the external power source. Thus, the wireless charging apparatus is able to provide a desired level of transmitted power to the remote device.

In one example, the controller disclosed in FIGS. 1A, 1B, 2A, 2B and 2C may control pulse width of the input voltage supplied to the wireless charging element or induction coil. This makes it possible to provide low power transmissions with the wireless charging element or the induction coil.

The wireless charging apparatus disclosed in FIGS. 1A, 1B, 2A, 2B and 2C may take any appropriate physical form. It may be, for example, a charging pad on which a device to be charged is placed, and the charging pad is connected to an external variable voltage power source or the external variable voltage power source is connected to the charging pad (as disclosed in examples in FIGS. 2A, 2B and 2C).

In the examples of FIGS. 2A, 2B and 2C, when universal serial bus type C interface is used and the controller 214, 224 follows a common power delivery standard, this makes the wireless charging apparatus compliant with all power sources supporting the universal serial bus type C interface. In case a power source cannot provide variable voltages, the adjustability of the transmitter power may be limited to low power levels only.

In any of the examples of FIGS. 1A, 1B, 2A, 2B and 2C, when the wireless charging apparatus need not include the varying voltage supply circuits, the wireless charging apparatus can be made smaller and simpler. Further, since no DC/DC converter is needed in the wireless charging apparatus, the wireless charging apparatus becomes more efficient when avoiding losses in the power adjustment system.

In any of the examples of FIGS. 1A, 1B, 2A, 2B and 2C, it is possible to use a fixed frequency. This provides the effect that the receiver part in a receiving device to be charged can be optimized to work with higher power, better efficiency and thinner material at this certain optimum frequency. This also minimizes receiver thickness with full power. In other words, when voltage control is used instead of frequency power control, this provides significant benefits in the receiver part.

In any of the examples of FIGS. 1A, 1B, 2A, 2B and 2C, when a USB 3.1 type C connector and a power source supporting USB Power Delivery (PD) v2.0 is used (or any other connector, power source and technique for providing with the power source variable voltage levels by request), this provides synergy benefits since the same power source as used to charge, for example, mobile devices and tablet computers in a wired manner can be used when connected to the wireless charging apparatus.

The controller 214, 224 disclosed in Figures 2A, 2B and 2C may comprise, for example, a processing unit connected to a memory. The memory may comprise a computer program that controls the operations performed by the controller 214, 224 when the computer program is executed by the processing unit.

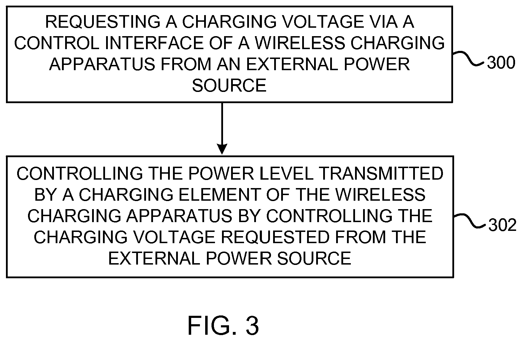

FIG. 3 is a flow diagram of a method for a wireless charging apparatus. The charging apparatus comprises a power interface for receiving a charging voltage from an external power source capable of providing varying voltages, a control interface for communicating with the external power source and a charging element for wirelessly charging a remote device, and a controller for controlling transmitted power provided by the charging element.

At 300 the wireless charging apparatus, for example the controller, requests a charging voltage via the control interface from the external power source. At 302 the wireless charging apparatus, for example, the controller controls the power level transmitted by the charging element by controlling the charging voltage requested from the external power source. In other words, the controller requests the charging voltage from the external power source, and after receiving the requested voltage from the external power source, it is able control an input voltage to be provided to the charging element.

In one example, the wireless apparatus comprises a port providing the power interface and the control interface. The port may be a universal serial bus type C connector port. The controller may request the charging voltage from the external power source according to power delivery specifications.

In one example, the controller may receive a signal from the remote device to increase or decrease power provided by the charging element and request a new charging voltage via the control interface or the port from the external power source.

In one example, the wireless charging apparatus comprises a universal serial bus type C connector port for receiving a charging voltage from the external power source, and the controller may request a charging voltage via a universal serial bus type C connector port from the external power source, and control the power level transmitted by the charging element by controlling the charging voltage requested from the external power source.

In one example, the wireless charging apparatus comprises a universal serial bus cable comprising a type C connector for connecting the wireless charging apparatus to the external power source, and the controller may request a charging voltage via the universal serial bus type C cable from the external power source, and control the power level transmitted by the charging element by controlling the charging voltage requested from the external power source.

In one example, the controller may control pulse width of an input voltage supplied to the charging element.

In one example, the controller may request the charging voltage via the control interface, the universal serial bus type C connector port or the universal serial bus cable from the external power source by using 50mV steps.

Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), Graphics Processing Units (GPUs).

The functions described herein performed by a controller may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible storage media include computer storage devices comprising computer-readable media such as disks, thumb drives, memory etc. and do not include propagated signals. Propagated signals may be present in a tangible storage media, but propagated signals per se are not examples of tangible storage media. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Alternatively, or in addition, the functionally described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc.

Any range or device value given herein may be extended or altered without losing the effect sought.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims.

It will be understood that the benefits and advantages described above may relate to one embodiment or may relate to several embodiments. The embodiments are not limited to those that solve any or all of the stated problems or those that have any or all of the stated benefits and advantages.

Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification. In particular, the individual features, elements, or parts described in the context of one example, may be connected in any combination to any other example also.

## Claims

1. A wireless charging apparatus (200) comprising:
a charging element (204) for wirelessly charging a remote device, and
a controller (214) for controlling transmitted power provided by the charging element;
wherein the controller is configured to request a charging voltage from a varying-voltage power source (102) capable of providing varying voltages, and to control the power level transmitted by the charging element by controlling the charging voltage requested from said varying-voltage power source;
**characterized in that**:
said varying-voltage power source is an external power source and the wireless charging apparatus comprises a cable (232) comprising a connector, being detachably connectable to the external power source, or a connector port (206), wherein the connector port or cable provides a power interface for receiving the charging voltage from the external power source and a control interface for communicating with the external power source, and wherein the controller is configured to perform said request and control of the charging voltage via said control interface as provided by said connector port or cable.

2. A wireless charging apparatus according to claim 1, wherein the port (206) is a universal serial bus type C connector port, and wherein the controller (214) is configured to request the charging voltage via the universal serial bus type C connector port from the external power source (202).

3. A wireless charging apparatus according to claim 1, wherein the cable (232) is a universal serial bus cable comprising a type C connector, and wherein the controller (214) is configured to request a charging voltage via the universal serial bus type C cable from the external power source (202).

4. A wireless charging apparatus according to claim 2 or 3, wherein the controller (214) is configured to request the charging voltage from the external power source (202) according to power delivery specifications.

5. A wireless charging apparatus according to any of claims 1 - 4,
wherein the controller (214) is configured to:
receive a signal from the remote device to increase or decrease the power provided by the charging element (204); and
in response thereto, to request a new charging voltage via the control interface from the external power source (202).

6. A wireless charging apparatus according to any of claims 1 - 5,
wherein the controller (214) is configured to:
control pulse width of an input voltage supplied to the charging element (204).

7. A wireless charging apparatus according to any of claims 1 - 6,
wherein the charging element (204) comprises an induction coil or a resonance coil.

8. A wireless charging apparatus according to any of claims 1 - 7,
wherein the controller (214) is configured to request the charging voltage via the control interface from the external power source (202) by using 50mV steps.

9. A wireless charging apparatus according to any of claims 1 - 8,
wherein the power transmitted by the charging element (202) is transmitted at a fixed frequency.

10. A method of operating a wireless charging apparatus (200) comprising a charging element (204) for wirelessly charging a remote device and a controller (214) for controlling transmitted power provided by the charging element, the method comprising:
from the wireless charging apparatus, requesting a charging voltage from a varying-voltage power source (202), and
controlling the power level transmitted by the charging element by controlling the charging voltage requested from said varying-voltage power source;
**characterized in that**:
said varying-voltage power source is external to the wireless charging apparatus and the wireless charging apparatus comprises a cable (232) comprising a connector, being detachably connectable to the external power source, or a connector port (206), wherein the connector port or cable provides a power interface for receiving the charging voltage from the external power source and a control interface for communicating with the external power source, and wherein said request and control of the charging voltage are performed via said control interface as provided by said connector port or cable.

11. A computer program comprising computer program code, which when executed by a processor, performs the method of claim 10.

12. A computer program according to claim 11, wherein the computer program is embodied on a computer-readable medium.

## Patentansprüche

1. Drahtlose Ladevorrichtung (200) umfassend:
ein Ladeelement (204) zum drahtlosen Laden eines entfernten Geräts, und
eine Steuerung (214) zur Steuerung der von dem Ladeelement bereitgestellten übertragenen Energie;
wobei die Steuerung eingerichtet ist, eine Ladespannung von einer zur Bereitstellung variabler Spannungen fähigen variablen Energie-/Spannungsquelle (102) anzufordern und durch Steuern der von der variablen Energie-/Spannungsquelle angeforderten Ladespannung den von dem Ladeelement übertragenen Leistungspegel zu steuern;
**dadurch gekennzeichnet, dass**
die variable Energie-/Spannungsquelle eine externe Energiequelle ist und die drahtlose Ladevorrichtung ein Kabel (232) mit einem Verbinder, welches lösbar an die externe Energiequelle angeschlossen werden kann, oder einen Anschlussport (206) umfasst, wobei der Anschlussport oder das Kabel eine Energieschnittstelle zum Empfang der Ladespannung von der externen Energiequelle und eine Steuerschnittstelle zur Kommunikation mit der externen Energiequelle bereitstellt, und wobei die Steuerung eingerichtet ist, die Anforderung und Steuerung der Ladespannung über die durch den Anschlussport oder das Kabel bereitgestellte Steuerschnittstelle durchzuführen.

2. Drahtlose Ladevorrichtung nach Anspruch 1, wobei der Port (206) ein Universal Serial Bus Typ C Anschlussport ist, und wobei die Steuerung (214) eingerichtet ist, die Ladespannung von der externen Energiequelle (202) über den Universal Serial Bus Typ C Anschlussport anzufordern.

3. Drahtlose Ladevorrichtung nach Anspruch 1, wobei das Kabel (232) ein Universal Serial Bus Kabel umfassend einen Typ C Verbinder ist, und wobei die Steuerung (214) eingerichtet ist, eine Ladespannung von der externen Energiequelle (202) über das Universal Serial Bus Typ C Kabel anzufordern.

4. Drahtlose Ladevorrichtung nach Anspruch 2 oder 3, wobei die Steuerung (214) eingerichtet ist, die Ladespannung von der externen Energiequelle (202) entsprechend Power Delivery Specifications anzufordern.

5. Drahtlose Ladevorrichtung nach einem der Ansprüche 1 bis 4,
wobei die Steuerung (214) eingerichtet ist,
vom entfernten Gerät ein Signal zur Erhöhung oder Reduzierung der vom Ladeelement (204) bereitgestellten Energie zu empfangen; und
in Reaktion darauf von der externen Energiequelle (202) eine neue Ladespannung über die Steuerschnittstelle anzufordern.

6. Drahtlose Ladevorrichtung nach einem der Ansprüche 1 bis 5,
wobei die Steuerung (214) eingerichtet ist,
die Pulsbreite einer an das Ladeelement (204) gelieferten Eingangsspannung zu steuern.

7. Drahtlose Ladevorrichtung nach einem der Ansprüche 1 bis 6,
wobei das Ladeelement (204) eine Induktionsspule oder Resonanzspule aufweist.

8. Drahtlose Ladevorrichtung nach einem der Ansprüche 1 bis 7,
wobei die Steuerung (214) eingerichtet ist, die Ladespannung in Schritten von 50mV von der externen Energiequelle (202) über die Steuerschnittstelle anzufordern.

9. Drahtlose Ladevorrichtung nach einem der Ansprüche 1 bis 8,
wobei die von dem Ladeelement (202) übertragene Energie mit einer festen Frequenz übertragen wird.

10. Verfahren zum Betreiben einer drahtlosen Ladevorrichtung (200), umfassend ein Ladeelement (204) zum drahtlosen Laden eines entfernten Geräts und eine Steuerung (214) zum Steuern der vom Ladeelement bereitgestellten übertragenen Energie,
umfassend:
von der drahtlosen Ladevorrichtung Anfordern einer Ladespannung von einer variablen Energie-/Spannungsquelle (202), und
Steuern des vom Ladeelement übertragenen Leistungspegels durch Steuern der von der variablen Energie-/Spannungsquelle angeforderten Ladespannung;
**dadurch gekennzeichnet, dass**
die variable Energie-/Spannungsquelle außerhalb der drahtlosen Ladevorrichtung liegt, und die drahtlose Ladevorrichtung ein Kabel (232) umfassend einen an die externe Energiequelle lösbar anschließbaren Verbinder oder einen Anschlussport (206) umfasst, wobei der Anschlussport oder das Kabel eine Energieschnittstelle zum Empfang der Ladespannung von der externen Energiequelle und eine Steuerschnittstelle zur Kommunikation mit der externen Energiequelle bereitstellt, und wobei die Anforderung und Steuerung der Ladespannung über die von dem Anschlussport oder Kabel bereitgestellte Steuerschnittstelle erfolgt.

11. Computerprogramm umfassend Computerprogrammcode, der bei Ausführung durch einen Prozessor das Verfahren nach Anspruch 10 durchführt.

12. Computerprogramm nach Anspruch 11, wobei das Computerprogramm in einem computerlesbaren Medium verkörpert ist.

## Revendications

1. Appareil de charge sans fil (200) comprenant :
un élément de charge (204) pour charger sans fil un dispositif éloigné, et
un contrôleur (214) pour contrôler une énergie transmise fournie par l'élément de charge ;
dans lequel le contrôleur est configuré pour solliciter, d'une source d'énergie à tension variable (102) capable de fournir des tensions variables, une tension de charge, et pour contrôler le niveau d'énergie que transmet l'élément de charge en contrôlant la tension de charge sollicitée de ladite source d'énergie à tension variable ;
**caractérisé en ce que** :
ladite source d'énergie à tension variable est une source d'énergie extérieure et l'appareil de charge sans fil comprend un câble (232) comportant un connecteur, qui est connecté de manière détachable à la source d'énergie extérieure, ou un port de connecteur (206), dans lequel le port de connecteur ou le câble constitue une interface d'énergie pour recevoir la tension de charge de la source d'énergie extérieure et une interface de contrôle pour établir une communication avec la source d'énergie extérieure, et dans lequel le contrôleur est configuré pur effectuer ladite sollicitation et contrôler la tension de charge via ladite interface de contrôle comme l'assure ledit port de connecteur ou ledit câble.

2. Appareil de charge sans fil selon la revendication 1, dans lequel le port (206) est un port de connecteur à bus série universel de type C, et dans lequel le contrôleur (214) est configuré pour solliciter, de la source d'énergie extérieure (202), la tension de charge via le connecteur à bus série universel de type C.

3. Appareil de charge sans fil selon la revendication 1, dans lequel le câble (232) est un câble à bus série universel comprenant un connecteur de type C, et dans lequel le contrôleur (214) est configuré pour solliciter, de la source de puissance extérieure (202), une tension de charge via le câble à bus série universel de type C.

4. Appareil de charge sans fil selon, soit la revendication 2, soit la revendication 3, dans lequel le contrôleur (214) est configuré pour solliciter, de la source d'énergie extérieure (202), la tension de charge, conformément aux spécifications régissant la transmission d'énergie.

5. Appareil de charge sans fil selon l'une quelconque des revendications 1 à 4, dans lequel le contrôleur (214) est configuré pour :
recevoir un signal du dispositif éloigné pour accroître ou réduire l'énergie fournie par l'élément de charge (204) ; et
en réponse à celui-ci, solliciter de la source d'énergie extérieure (202) une nouvelle tension de charge via l'interface de contrôle.

6. Appareil de charge sans fil selon l'une quelconque des revendications 1 à 5, dans lequel le contrôleur (214) est configuré pour :
contrôler la largeur d'impulsion d'une tension d'entrée fournie à l'élément de charge (204).

7. Appareil de charge sans fil selon l'une quelconque des revendications 1 à 6, dans lequel l'élément de charge (204) comprend une bobine d'induction ou une bobine de résonance.

8. Appareil de charge sans fil selon l'une quelconque des revendications 1 à 7, dans lequel le contrôleur (214) est configuré pour solliciter, de la source d'énergie extérieure (202), la tension de charge via l'interface de contrôle en utilisant des pas de 50 mV.

9. Appareil de charge sans fil selon l'une quelconque des revendications 1 à 8, dans lequel l'énergie transmise par l'élément de charge (202) est transmise à une fréquence fixe.

10. Procédé pour exploiter un appareil de charge sans fil (200) comprenant un élément de charge (204), afin de charger sans fil un dispositif éloigné et un contrôleur (214) pour contrôler de l'énergie transmise fournie par l'élément de charge, le procédé consistant à :
à partir de l'appareil de charge sans fil, solliciter d'une source d'énergie à tension variable (202), une tension de charge, et
contrôler le niveau d'énergie transmis par l'élément de charge en contrôlant la tension de charge sollicitée de la source d'énergie à tension variable ;
**caractérisé en ce que** :
ladite source d'énergie à tension variable est une source externe de l'appareil de charge sans fil et l'appareil de charge sans fil comprend un câble (232) comportant un connecteur, qui est connecté de manière détachable à la source d'énergie extérieure, ou un port de connecteur (206), dans lequel le port de connecteur ou le câble constitue une interface d'énergie pour recevoir la tension de charge de la source d'énergie extérieure et une interface de contrôle pour établir une communication avec la source d'énergie extérieure, et dans lequel ladite sollicitation et le contrôle de la tension de charge sont effectués, via ladite interface de contrôle, comme l'assure ledit port de connecteur ou ledit câble.

11. Programme d'ordinateur comprenant un code de programme d'ordinateur qui, lorsque exécuté par un processeur, effectue le procédé selon la revendication 10.

12. Programme d'ordinateur selon la revendication 11, dans lequel le programme d'ordinateur est incorporé dans un support lisible par ordinateur.
